# EUROPEAN PATENT SPECIFICATION

(11) **EP 2 092 165 B1**
(45) Date of publication and mention of the grant of the patent: **20.10.2010**
(21) Application number: 07857258.3
(22) Date of filing: 05.12.2007
(51) Int. Cl.: F01K 23/08, F02C 6/18, F25B 27/02, F02B 39/00

(54) **USE OF A TURBOCHARGER AND WASTE HEAT CONVERSION SYSTEM**
VERWENDUNG EINES TURBOLADERS UND ABWÄRMEUMWANDLUNGSSYSTEM
UTILISATION D'UN TURBOCOMPRESSEUR ET SYSTÈME DE CONVERSION DE LA CHALEUR RÉSIDUELLE

(30) Priority: 20.12.2006 EP 06405537
(43) Date of publication of application: 26.08.2009
(60) Divisional application: 10160319.9
(73) Proprietor: ABB Technology AG, 8050 Zürich (CH)
(72) Inventor: BUERKI, Thomas, 8121 Benglen (CH); BREMER, Joachim, 8121 Benglen (CH); PAICE, Andrew D., 5405 Dättwil (CH); TROENDLE, Dietmar, 78794 Dogern (DE)
(74) Representative: ABB Patent Attorneys
(86) International application number: PCT/EP2007/063349
(87) International publication number: WO 2008/074637

(56) References cited:
- US-A- 4 942 736
- US-A1- 2001 015 060
- US-A1- 2004 088 992
- US-A1- 2006 026 981

## Description

### FIELD OF THE INVENTION

The invention relates to the field of waste heat conversion. It departs from a system for converting waste heat by means of a closed organic rankine cycle system as described in the preamble of claim 3.

### BACKGROUND OF THE INVENTIONS

Industrial processes generally produce waste heat, e.g. by gas condensation or cooling fluids, or comprised in exhaust gases from chemical, glass, paper or steel production processes, from waste incineration processes, or from fuel combustion in internal combustion engines such as gas turbines or reciprocating engines. Such waste heat is commonly discharged to the atmosphere. However, in order to improve the overall efficiency of the industrial processes without increasing the output of emissions by utilizing the waste heat, a bottoming cycle is commonly used. Bottoming cycles usually require high exhaust temperatures, yet an example of a bottoming cycle which requires lower exhaust temperatures is the Organic Rankine Cycle (ORC). ORC produces shaft power from lower temperature waste heat sources by using an organic working fluid with a boiling temperature suited to the heat source. The well known closed rankine cycle comprises an evaporator or boiler for the evaporation of a working fluid, a turbine fed with vapour from the evaporator to drive a generator or other load, a condenser for condensing the exhaust vapour from the turbine and means, such as a pump, for recycling the condensed working fluid to the evaporator. Such rankine cycle systems are commonly used for the purpose of generating electrical power.

The patent US 6880344 describes a closed rankine cycle that can efficiently use waste heat from several sources in a reciprocating or gas turbine engine system. A prior-art centrifugal compressor is used as the turbine. The organic rankine cycle system is combined with a vapour compression cycle system with the turbine generator of the organic rankine cycle generating the power necessary to operate the motor of the refrigerant compressor of the vapour compression cycle. The latter is applied with its evaporator cooling the inlet air into a gas turbine, and the organic rankine cycle is applied to receive heat from a gas turbine exhaust to heat its evaporator. A common condenser is used for the organic rankine cycle and the vapour compression cycle, with a common organic working fluid or refrigerant R-245fa being circulated within both systems. In another embodiment, an organic rankine cycle system is applied to an internal combustion engine to cool the fluids thereof, and the turbo charged air is cooled first by the organic rankine cycle system and then by an air conditioner prior to passing into the intake of the engine.

In the proposed rankine cycle, the exhaust gases from the gas turbine providing heat to the organic rankine cycle have a temperature of around 700°F or 370°C. In the evaporator, the refrigerant is being brought into heat exchange relationship with a flow of hot exhaust gases and heated to about 225°F or 107°C. At the outlet of the turbine, the working fluid has a temperature of 140°F or 60°C.

### DESCRIPTION OF THE INVENTION

It is therefore an objective of the invention to utilise waste heat from industrial processes in order to produce shaft power and generate pressurized gases or electrical power. It is another objective of the invention to further increase the overall efficiency of thermodynamic industrial processes or of combustion process of fossil fuels. These objectives are achieved by a use of a turbocharger and a system for converting waste heat into shaft power according to claims 1 and 3, respectively. Further preferred embodiments are evident from the dependent patent claims.

According to the invention, waste heat sources of comparatively low quality, which so far have been disregarded mainly for economical reasons as well as for a lack of suitable equipment, are exploited by a novel waste heat recycling procedure. In the latter, a closed rankine cycle system is powered with waste heat that is provided e.g. in the form of a hot cooling fluid or a flow of residual heat gas having a comparatively low temperature of less than 350°C, eventually less than 250°C and in some circumstances even less than 200°C. In an evaporator or heat exchanger in heat exchange relationship with the waste heat, a suitable working fluid is evaporated to a pressure of less than 8 bar and preferably less than 6 bar, and subsequently fed to a turbine for producing shaft power. The limited pressure of the working fluid in the rankine cycle system allows using standard equipment and piping instead of high pressure equipment and piping, and prevents the heat exchanger from being subject to restrictive safety regulations.

The shaft power can be used to generate pressurized gases such as air, by means of a turbocharger originally developed for an internal combustion engine such as a diesel and/or gas engine in the 500 kW plus power range. The one-stage axial or radial turbines of these turbochargers are well suited to the thermodynamic conditions chosen and in addition, due to their proven design and lifecycle stability, compensate for the somewhat reduced thermodynamic efficiency. Alternatively, the compressor stage of the turbocharger can be removed from the shaft of the turbine and replaced by a generator for generating electricity.

In a preferred embodiment, the working fluid is an organic, non-toxic, non-explosive refrigerant such as R-245fa, available e.g. from Honeywell Inc. as Honeywell HFC-245fa or Genetron® 245fa. In the context of the present invention, it was shown that a working fluid of this kind could be evaporated and heated to a temperature of approximately 60°C by means of waste heat at a temperature of less than 200°C, where in some circumstances even waste heat temperatures as low as 150°C for a residual heat gas or 120°C for a cooling fluid were sufficient.

In an advantageous variant of the invention, the turbine is a high-speed turbine rotating at a speed of more than 1.5 times a nominal AC network frequency of an electric power network. This directly driven high speed generator including a frequency converter allows for a highly efficient power generation and avoids the drawbacks of a gear box between the turbine and the generator.

In another advantageous variant of the invention, a turbine inlet casing with a segmented cross section and comprising several distinct flow channels for guiding the evaporated working fluid to the blades of the rotor of the turbine is provided. The segmentation allows a better operation of the turbine at part-load conditions. Alternatively, variable inlet guide vanes may be employed, which likewise enable the turbine to operate in a broader load range and at high efficiencies. An exemplary guide-vane system for an axial flow exhaust gas turbocharger is disclosed in the EP1264079.

### BRIEF DESCRIPTION OF THE DRAWINGS

The subject matter of the invention will be explained in more detail in the following text with reference to preferred exemplary embodiments which are illustrated in the attached schematic drawings, of which:
Fig.1 is an illustration of a rankine cycle system, and
Fig.2 is an illustration of a rankine cycle system with intermediate water circuit, and
Fig.3 depicts a turbine inlet casing with a segmented cross section.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

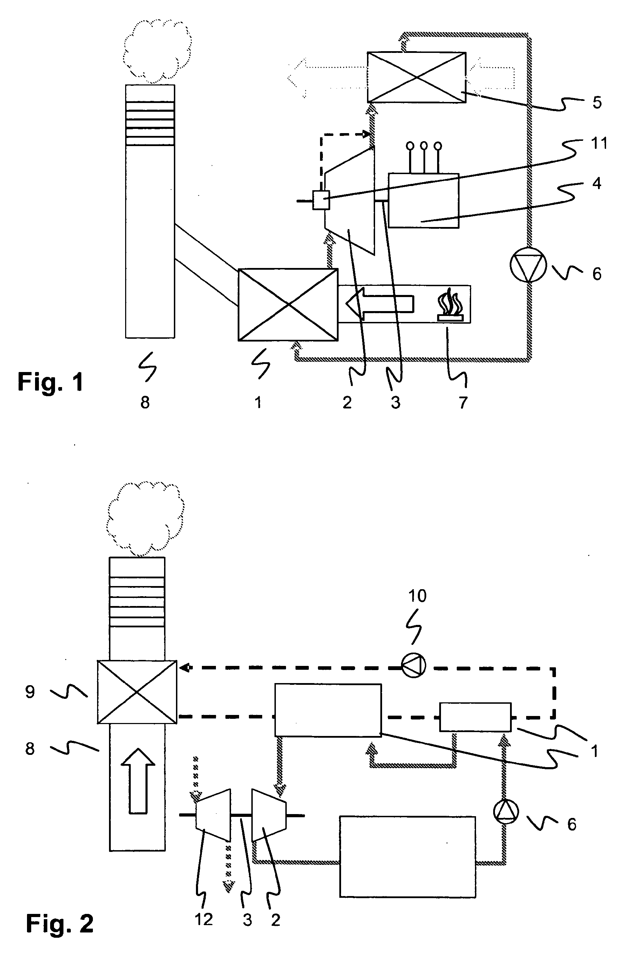

Fig.1 shows a schematic illustration of a closed rankine cycle system, comprising, in a clockwise flow direction of the working fluid as indicated by the arrows, an evaporator 1 or boiler for the evaporation of a working fluid, a turbine 2 fed with vapour from the evaporator to drive, via a common shaft 3, a generator 4 connected to an electric power network or any other load, a separator 11, a condenser 5 for condensing the exhaust vapours from the turbine and means, such as a pump 6, for recycling the condensed working fluid to the evaporator 1. The separator 11 separates or extracts working fluid residues from the lubricating fluids such as oil used in the oil/lubrication system of the gearing of the turbine 2, and re-injects the separated working fluid residues into the main working fluid cycle as indicated by the dashed line. Residual heat gas or hot exhaust gas from the waste heat source 7 has a temperature, when entering the evaporator 1, which is below 350°C, and eventually below 250°C, at ambient pressure, and is finally released to the ambient via chimney 8. Typically, in the evaporator 1, the working fluid is heated up to 60°C at a pressure of less than 8 bar and expanded in the turbine 2 to 30°C at ambient pressure, where it is still gaseous.

Fig.2 depicts a system with an intermediate water circuit (dashed line). A water heat exchanger 9 is placed in the exhaust gas stream in chimney 8, where water is being heated up by heat from the residual gas. The water is conducted to evaporator 1, where the working fluid is evaporated and the steam condenses. The water is then cycled back to the water heat exchanger 9 by means of a water pump 10. In the particular embodiment depicted, evaporator 1 is a two-stage evaporator consisting of a liquid-liquid pre-heater and a gas-liquid evaporator, the two stages being serially traversed by the water and, in the opposite direction, by the working fluid. In the embodiment depicted, the turbine 2 is connected, via shaft 3, to a compressor instead of a generator, and the shaft power is used to generate pressurized gases. The rest of the working fluid cycle is unchanged with respect to Fig.1.

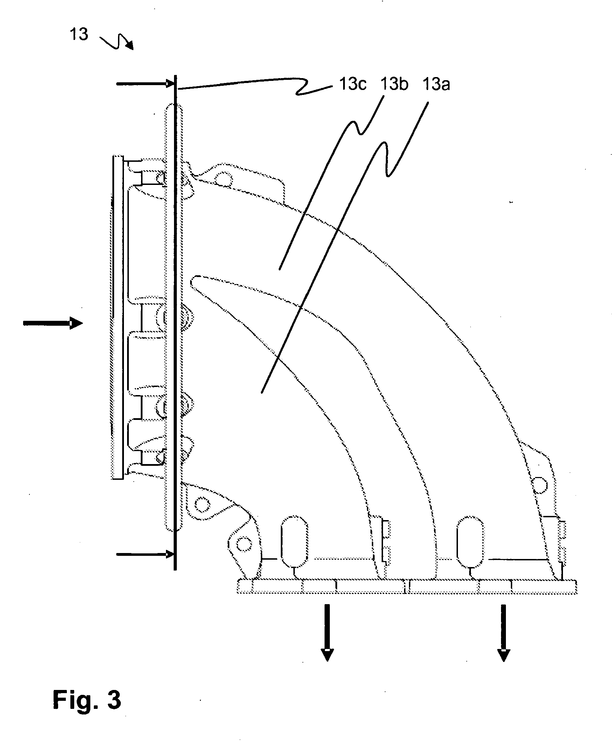

Fig.3 shows a turbine inlet casing 13, with the working fluid entering from the left and exiting the casing at the bottom towards the turbine (not depicted in Fig.3). The casing comprises at least two flow channels 13a, 13b, and the cross section 13c perpendicular to the flow direction is segmented or sectionalized, wherein distinct segments correspond to the at least two flow channels and may be opened or closed independently. This allows to accommodate for part-load operating conditions, in which case one or more of the flow channels remain closed.

### LIST OF DESIGNATIONS

- 1: evaporator
- 2: turbine
- 3: shaft
- 4: generator
- 5: condenser
- 6: pump
- 7: waste heat source
- 8: chimney
- 9: waste heat to water heat exchanger
- 10: water pump
- 11: separator
- 12: compressor
- 13: turbine inlet casing

## Claims

1. A use of a turbocharger comprising a turbine (2) connected via a shaft (3) to a compressor stage for generating pressurized gases,
**characterized in that** the turbine (2) of the turbocharger is coupled to a closed rankine cycle system comprising an evaporator (1), the turbine (2) of the turbocharger and a condenser (5), wherein the evaporator (1) is heated by waste heat from a waste heat source (7) at a waste heat temperature not exceeding 350°C and preferably not exceeding 250°C, a working fluid is evaporated in the evaporator (1) to drive the turbine (2) at a pressure not exceeding 8 bar, and the condenser (5) is fluidly interconnected between the turbine (2) and the evaporator (1).

2. A system converting waste heat from a waste heat source (7) into shaft power, comprising a closed rankine cycle system including a evaporator (1) heated by the waste heat, a turbine (2) driven by a working fluid evaporated in the evaporator (1) and connected to a shaft (3), and a condenser (5) fluidly interconnected between the turbine (2) and the evaporator (1),
**characterized in that** a waste heat temperature at the evaporator (1) does not exceed 350°C and is preferably below 250°C, and **in that** a pressure of the evaporated working fluid does not exceed 8 bar.

3. The system according to claim 2, **characterized in that** the turbine (2) is a turbine of a turbocharger connected via a shaft (3) to a generator (4) for generating electricity.

4. The system according to claim 2, **characterized in that** the working fluid is an organic, non-toxic, non-explosive refrigerant.

5. The system according to claim 2, **characterized in that** residual heat gases from the waste heat source (7) enter into a heat exchange relationship with the evaporator (1) via an intermediate water or oil circuit for transferring the waste heat from the residual heat gas to the working fluid.

6. The system according to claim 2, **characterized in that** the waste heat from the waste heat source (7) evaporates the working fluid in the evaporator (1) without any intermediate fluid.

7. The system according to claim 2, **characterized in that** the turbine (2) is a high speed turbine with a plain gearing and rotating at a speed of at least 1.5 times the nominal AC frequency of an electric power network, and feeding a high speed generator including power electronics for frequency conversion.

8. The system according to claim 2, **characterized in that** it comprises a separator (11) for separating working fluid residues from the fluids used in an oil system of a gearing of the turbine (2).

9. The system according to claim 2, **characterized in that** the turbine (2) comprises a segmented inlet casing (13) or a variable inlet guide vane.

## Patentansprüche

1. Verwendung eines Turboladers, der eine Turbine (2) aufweist, die über eine Welle (3) mit einer Kompressorstufe verbunden ist, um mit Druck beaufschlagte Gase zu erzeugen,
**dadurch gekennzeichnet, dass** die Turbine (2) des Turboladers mit einem System mit geschlossenem Rankine-Zyklus gekoppelt ist, das einen Verdampfer (1), die Turbine (2) des Turboladers und einen Kondensator (5) enthält, wobei der Verdampfer (1) durch Verlustwärme von einer Verlustwärmequelle (7) mit einer Verlustwärmetemperatur, die 350 °C und vorzugsweise 250 °C nicht übersteigt, erwärmt wird, wobei Arbeitsfluid in dem Verdampfer (1) verdampft wird, um die Turbine (2) bei einem Druck, der 8 Bar nicht übersteigt, anzutreiben und wobei der Kondensator (5) zwischen der Turbine (2) und dem Verdampfer (1) fluidtechnisch angeschlossen ist.

2. System, das Verlustwärme von einer Verlustwärmequelle (7) in Wellenleistung umsetzt, mit einem System mit geschlossenem Rankine-Zyklus, das einen durch die Verlustwärme erhitzten Verdampfer (1), eine Turbine (2), die durch ein im Verdampfer (1) verdampftes Arbeitsfluid angetrieben wird und mit einer Welle (3) verbunden ist, und einen Kondensator (5), der zwischen der Turbine (2) und dem Verdampfer (1) fluidtechnisch angeschlossen ist, enthält,
**dadurch gekennzeichnet, dass** eine Verlustwärmetemperatur im Verdampfer (1) 350 °C nicht übersteigt und vorzugsweise niedriger als 250 °C ist und dass ein Druck des verdampften Arbeitsfluids 8 Bar nicht übersteigt.

3. System nach Anspruch 2, **dadurch gekennzeichnet, dass** die Turbine (2) eine Turbine eines Turboladers ist, der über eine Welle (3) mit einem Generator (4) für die Erzeugung von Elektrizität verbunden ist.

4. System nach Anspruch 2, **dadurch gekennzeichnet, dass** das Arbeitsfluid ein organisches, nicht toxisches, nicht explosives Kältemittel ist.

5. System nach Anspruch 2, **dadurch gekennzeichnet, dass** Restwärme-Gase von der Verlustwärmequelle (7) über einen dazwischen angeordneten Wasser- oder Ölkreis in eine Wärmetauscherbeziehung mit dem Verdampfer (1) eintreten, um die Verlustwärme von dem Restwärmegas an das Arbeitsfluid zu übertragen.

6. System nach Anspruch 2, **dadurch gekennzeichnet, dass** die Verlustwärme von der Verlustwärmequelle (7) das Arbeitsfluid in dem Verdampfer (1) ohne jegliches Zwischenfluid verdampft.

7. System nach Anspruch 2, **dadurch gekennzeichnet, dass** die Turbine (2) eine Hochgeschwindigkeitsturbine mit einem einfachen Getriebe ist und sich mit einer Drehzahl dreht, die wenigstens gleich der 1,5-fachen Nennwechselstromfrequenz eines elektrischen Stromnetzes ist, und einen Hochgeschwindigkeitsgenerator, der Leistungselektronik für die Frequenzumsetzung enthält, versorgt.

8. System nach Anspruch 2, **dadurch gekennzeichnet, dass** es einen Separator (11) zum Trennen von Arbeitsfluidresten von den in einem Ölsystem eines Getriebes der Turbine (2) verwendeten Fluiden enthält.

9. System nach Anspruch 2, **dadurch gekennzeichnet, dass** die Turbine (2) ein segmentiertes Einlassgehäuse (13) oder eine variable Einlassführungsschaufel aufweist.

## Revendications

1. Utilisation d'un turbocompresseur comprenant une turbine (2) connectée par le biais d'un arbre (3) à un étage du compresseur pour générer des gaz sous pression,
**caractérisée en ce que** la turbine (2) du turbocompresseur est accouplée à un système à cycle de Rankine fermé comprenant un évaporateur (1), la turbine (2) du turbocompresseur et un condenseur (5), l'évaporateur (1) étant chauffé par la chaleur perdue provenant d'une source de chaleur perdue (7) à une température de chaleur perdue ne dépassant pas 350°C et de préférence ne dépassant pas 250°C, un fluide de travail est évaporé dans l'évaporateur (1) pour entraîner la turbine (2) à une pression ne dépassant pas 8 bars et le condenseur (5) est interconnecté fluidiquement entre la turbine (2) et l'évaporateur (1).

2. Système convertissant la chaleur perdue provenant d'une source de chaleur perdue (7) en puissance d'arbre, comprenant un système à cycle de Rankine fermé comportant un évaporateur (1) chauffé par la chaleur perdue, une turbine (2) entraînée par un fluide de travail évaporé dans l'évaporateur (1) et connecté à un arbre (3), et un condenseur (5) interconnecté fluidiquement entre la turbine (2) et l'évaporateur (1),
**caractérisé en ce qu'**une température de la chaleur perdue au niveau de l'évaporateur (1) ne dépasse pas 350°C et est de préférence en dessous de 250°C, et **en ce qu'**une pression du fluide de travail évaporé ne dépasse pas 8 bars.

3. Système selon la revendication 2, **caractérisé en ce que** la turbine (2) est une turbine d'un turbocompresseur connectée par le biais d'un arbre (3) à un générateur (4) pour générer de l'électricité.

4. Système selon la revendication 2, **caractérisé en ce que** le fluide de travail est un réfrigérant organique, non toxique, non explosif.

5. Système selon la revendication 2, **caractérisé en ce que** des gaz de chaleur résiduelle provenant de la source de chaleur perdue (7) entrent en relation d'échange thermique avec l'évaporateur (1) par le biais d'un circuit d'eau ou d'huile intermédiaire pour transférer la chaleur perdue du gaz de chaleur résiduelle au fluide de travail.

6. Système selon la revendication 2, **caractérisé en ce que** la chaleur perdue provenant de la source de chaleur perdue (7) évapore le fluide de travail dans l'évaporateur (1) sans aucun fluide intermédiaire.

7. Système selon la revendication 2, **caractérisé en ce que** la turbine (2) est une turbine à grande vitesse avec un simple engrenage et tournant à une vitesse d'au moins 1,5 fois la fréquence CA nominale d'un réseau d'alimentation électrique, et alimentant un générateur à grande vitesse comportant un système électronique de puissance en vue de la conversion de fréquence.

8. Système selon la revendication 2, **caractérisé en ce qu'**il comprend un séparateur (11) pour séparer les résidus de fluide de travail des fluides utilisés dans un système d'huile d'un engrenage de la turbine (2).

9. Système selon la revendication 2, **caractérisé en ce que** la turbine (2) comprend une enceinte d'entrée segmentée (13) ou une ailette de guidage d'entrée variable.
